# EUROPÄISCHE PATENTSCHRIFT

(11) **EP 1 662 865 B1**
(45) Veröffentlichungstag und Bekanntmachung des Hinweises auf die Patenterteilung: **21.03.2007**
(21) Anmeldenummer: 04765249.0
(22) Anmeldetag: 15.09.2004
(51) Int. Cl.: A01M 3/00

(54) **VERFAHREN UND VORRICHTUNG ZUM EINFANGEN VON INSEKTEN**
METHOD AND DEVICE FOR CAPTURING INSECTS
PROCEDE ET DISPOSITIF POUR CAPTURER DES INSECTES

(30) Priorität: 17.09.2003 DE 10342939
(43) Veröffentlichungstag der Anmeldung: 07.06.2006
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2004/010342
(87) Internationale Veröffentlichungsnummer: WO 2005/032248

(56) Entgegenhaltungen:
- WO-A-93/25073
- BE-A- 1 000 682
- DE-U- 29 806 669
- GB-A- 424 235
- US-A- 3 965 608

## Beschreibung

Die Erfindung betrifft eine Vorrichtung und ein Verfahren zum Einfangen von Insekten nach dem Oberbegriff der Ansprüche 1 oder 11, mit der insbesondere lästige Insekten wie beispielsweise Stubenfliegen, Mücken und insbesondere Stechmücken eingefangen werden können.

Zum Fangen von Insekten, insbesondere von Fluginsekten, sind bereits zahlreiche Methoden und Vorrichtungen vorgeschlagen worden, siehe z.B. Dokument BE-A-1 000 682. Im Hausbereich sind beispielsweise mit einem Leim versehenen Papierstreifen bekannt, die an der Decke aufgehängt werden. Kommt ein Insekt dem Leim zu nahe, bleibt es daran haften. Andererseits sind Einrichtungen bekannt, bei denen insbesondere durch UV-Licht Insekten angelockt werden, die dann an einem unter Strom stehenden geladenen Gitter getötet werden.

Aus der dem Oberbegriff des Anspruches 1 zugrundelegenden DE 43 27 150 A1 ist eine Vorrichtung in Form eines Handgeräts bekannt, bei dem durch einen bedarfsweise erzeugten Unterdruck ein Insekt in einen Sammelraum hineingezogen wird. Die Insekten werden durch den Unterdruck immobilisiert bzw. getötet und können anschließend aus dem Sammelraum heraus entsorgt werden.

Aus der WO-A 93/25073 ist eine Lasereinrichtung zum Femhalten von Insekten bekannt. Der Laser wird zum Blenden bis zum Zerstören der Insekten vor einer zu schützenden Öffnung eingesetzt, ohne die Insekten einzufangen.

In der DE 695 12 266 T2 wird eine Lichtquelle zum Anziehen von Insekten eingesetzt, wobei eine Fläche beleuchtet wird, die mit einer unter Strom gesetzten Fläche zusammenarbeitet, an der das Insekt bei Berührung getötet wird. Die Immobilisierung der Insekten erfolgt beim Auftreffen auf der unter Strom gesetzten Fläche. Ähnliche Fangvorrichtungen sind aus der DE 35 11 215 C2 und der DE 198 35 059 A1 bekannt.

Aus der DE 690 29 727 T2 ist eine vergleichbare Vorrichtung bekannt, bei der eine UV-Lichtquelle zum Anziehen der Insekten verwendet wird, jedoch das dahinter geschaltete Gitter mit einer nicht tödlichen elektrischen Ladung versehen ist. Dadurch können die Insekten betäubt und in einen Sammelbehälter verbracht werden. Die Immobilisierung durch das elektrisch geladene Gitter erfolgt hinter der Fangöffnung.

Ausgehend von diesem Stand der Technik liegt der vorliegenden Erfindung die Aufgabe zugrunde, eine Vorrichtung und ein Verfahren zum handlichen, einfachen Einfangen von Insekten zu schaffen.

Diese Aufgabe wird durch eine Vorrichtung und ein Verfahren mit den Merkmalen des Anspruches 1 bzw. 11 gelöst.

Die Immobilisierungseinrichtung wirkt räumlich vor der Fangöffnung auf einen Fangraum oder Fangbereich so ein, dass das vorzugsweise bereits nicht mehr fliegende Insekt bereits vor Berührung der Vorrichtung so immobilisiert wird, dass es eingefangen werden kann. Anschließend gelangt das Insekt nach Ausschalten der Immobilisierungseinrichtung in einen Sammelbehälter. Die Insekten werden schonend eingesammelt und können später bedarfsweise aus dem Sammelbehälter entfernt werden. Insbesondere für Mitglieder von Weltreligionen, die an eine Wiedergeburt der Seele auch in anderen Körpern glauben, ist dies ein beträchtlicher Vorteil.

Vorzugsweise erfolgt die Immobilisierung der Insekten durch Blenden, wobei sich als besonders effektiv ein pulsierendes Licht mit einer Frequenz von 5 bis 20 Hertz herausgestellt hat. Dass pulsierendes Licht diesen Effekt auf Insekten hat, scheint in der Biologie nicht bekannt zu sein. Dieses Licht wirkt schon in einiger Entfernung vor der Vorrichtung in einem Fangbereich, so dass die vom Licht erfassten Insekten nicht mehr weg fliegen. Infolge der Blendwirkung bleiben die Insekten sitzen, so dass sie in einen Fangraum überführt werden können, indem der Fangraum über die Insekten gestülpt wird. Anschließend können die Insekten in den Sammelbehälter verbracht werden, was üblicherweise dadurch geschieht, dass nach Ausschalten der Lichtquelle und Nachlassen der Blendwirkung die Insekten selbsttätig ihrem Fluchtinstinkt folgend in den Sammelbehälter flüchten.

Der Fluchtinstinkt kann durch Verdunkeln des Fangraums nach Erfassen des Insekts unterstützt werden. Dies kann durch eine Relativbewegung zwischen Fangraum und Gehäuse geschehen, so dass das dunkle Gehäuse über den lichtdurchlässigen Fangraum geführt wird, gleichzeitig kann aber auch das Licht im Fangraum ausgeschaltet werden. Unter Umständen genügt es dann, dass im Übergangsbereich zum Sammelbehälter Licht von außen eintritt. Vorzugsweise kann dort nochmals eine Lichtquelle angeordnet werden. Wird auch das Volumen des Fangraums gleichzeitig verringert, sucht das Insekt seinem Fluchtinstinkt folgend den Weg zum Licht und gelangt damit in den Sammelbehälter. Hilfsweise kann eine mechanische Vorrichtung im Fangraum eingesetzt werden, um das Insekt in die Fangöffnung zu verfrachten.

Weitere Vorteile ergeben sich aus den Unteransprüchen.

Im Folgenden wird Erfindung an Hand der beigefügten Figuren näher erläutert. Es zeigen :
- Fig. 1: Eine Seitenansicht der als Handgerät ausgebildeten Vorrichtung im Ausgangszustand,
- Fig. 2: eine Stirnansicht der Vorrichtung gemäß Fig. 1,
- Fig. 3: eine Schnittansicht der Vorrichtung in einer Darstellung gemäß Fig. 1,
- Fig. 4: einen Schnitt durch die Fanghülse,
- Fig. 5: eine Darstellung gemäß Fig. 3 mit an einer Anlagefläche angelegtem und verdunkeltem Fangraum,
- Fig. 6: eine stirnseitige Ansicht des Fangraums in einer weiteren Ausführungsform.

Die in den Figuren dargestellte Vorrichtung dient zum Einfangen von Insekten, insbesondere von Fluginsekten wie Stubenfliegen Mücken, Stechmücken, aber auch Wespen, Bienen und dergleichen. Im Ausführungsbeispiel ist ein Handgerät dargestellt, grundsätzlich kann die Vorrichtung aber auch auf andere Weise eingesetzt werden. Bei einer Ausgestaltung als Handgerät kann die Vorrichtung grundsätzlich so ausgestaltet werden, dass sie in jede Tasche passt. Je nach Bedarf kann sie insbesondere in Krankenhäusern, Reinräumen, im privaten Bereich oder auch in der Gastronomie eingesetzt werden, wenn es darum geht, insbesondere nicht mehr fliegende Insekten aus der Nähe von Lebensmitteln und Speisen von Gästen zu entfernen.

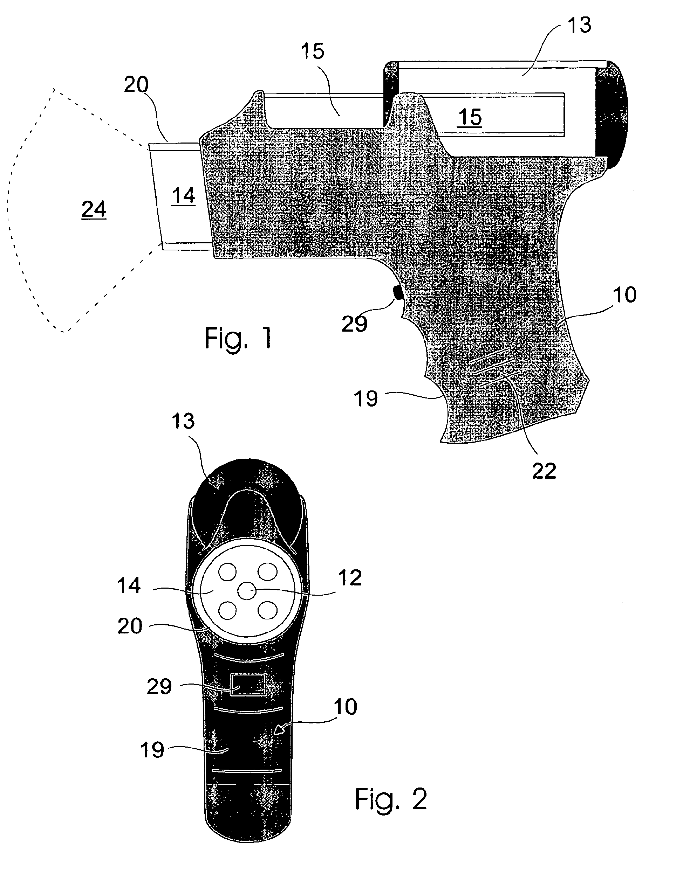

Die Vorrichtung besitzt ein Gehäuse 10 mit einer Fangöffnung 11, die im vorliegenden Fall in der Wandung 14a einer den Fangraum 14 umgebenden Fanghülse 20 angeordnet ist. Ferner ist eine Immobilisierungseinrichtung zum zumindest zeitweisen Immobilisieren der Insekten vorgesehen. Die Immobilisierunaseinrichtung ist im Ausführungsbeispiel durch eine Lichtquelle 12 gebildet, die die Aufgabe hat, die im in Fig. 1 schematisch angedeuteten Fangbereich 24 vor dem Gerät oder im Fangraum 14 gefangenen Insekten zu blenden. Die wenigstens eine Lichtquelle 12 kann ei ne Glühbirne, aber auch genauso gut eine LED sein, wobei sich insbesondere ein z.B. sinus- oder rechteckförmiges Pulsieren der Lichtquelle als vorteilhaft herausgestellt hat. Vorzugsweise wird die Intensität der Lichtquelle nach dem Überstülpen von 0 auf 100% gedimmt, wofür sich ein Zeitraum von etwa zwei Sekunden dauert als geeignet erwiesen hat. Die vorzugsweise vorübergehende Blendwirkung tritt bei Gleichlicht auch ein, ist allerdings schlechter. Als Immobilisierungseinrichtung können aber auch andere Mittel verwendet werden, sofern sicher gestellt ist, dass diese für den Menschen und in der Evolution höher stehende Tiere unschädlich sind, andererseits aber vorzugsweise auch nur eine zeitweise Immobilisierung bzw. Blendung der Insekten bewirken.

Die Lichtquelle 12 strahlt vorzugsweise mit einem schmalen Abstrahlkegel aus der Vorrichtung heraus. Damit kann ein Insekt z.B. aus 1 m Entfernung anvisiert werden. Obwohl der Benutzer dann auf das Insekt zugeht, bleibt dieses sitzen, bis der Fangraum 14 über das Insekt gestülpt wird. Da der Fangraum vorzugsweise zumindest im vorderen Bereich transparent ist, nimmt dies das Insekt auf Grund der Blendung mit seinen Facettenaugen zunächst nicht wahr. Der Fangraum 14 muss keine Röhre sein, er kann ebenso z.B. durch ein Gitter oder Netz begrenzt sein. Nachdem der Fangraum über das Insekt gestülpt ist, kann er verdunkelt werden, um das Insekt in Richtung auf eine Sammeleinrichtung 13 zum Sammeln und Rückhalten der Insekten zu bewegen bzw. sich bewegen zu lassen, nachdem diese die Fangöffnung 11 passiert haben.

Vor der Fangöffnung 11 ist der Fangraum 14 vorgesehen, der von der Immobilisierungseinrichtung zumindest zeitweise beeinflussbar ist. Im Ausführungsbeispiel wirkt die Lichtquelle in dem Fangbereich 24 (Fig. 1) vor, bzw. außerhalb der Vorrichtung als auch im Fangraum 14 und blendet die in diesem Bereich befindlichen Insekten. Vom Fangraum aus gelangen die Insekten über die Fangöffnung 11 in einen Übergangsbereich 15 zur Sammeleinrichtung 13. Der Übergangsbereich kann lediglich durch eine Öffnung, z.B. die Fangöffnung 11 gebildet sein, vorzugsweise handelt es sich jedoch bei dem Übergangsbereich um ein gesondertes Element bzw. einen gesonderten Raum.

Die nahe der Fangöffnung 11 angeordnete Lichtquelle 12 wird mit einer zum indest für das Insektenauge sichtbaren Wellenlänge betrieben. Als vorteilhaft hat sich eine Modulation zwischen 5 und 20 Hertz, vorzugsweise 10 Hertz herausgestellt. Bei dieser Modulation fängt das insekt an sich zu bewegen und zu zittern, was das Überstülpen des Fangraums erleichtert. Vorzugsweise wird nur eine Lichtquelle verwendet, es können jedoch mehrere vorgesehen sein.

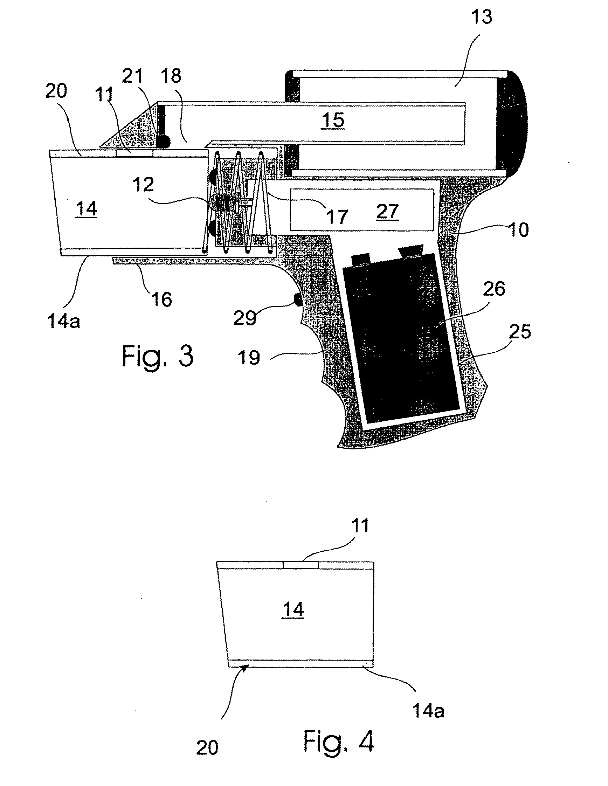

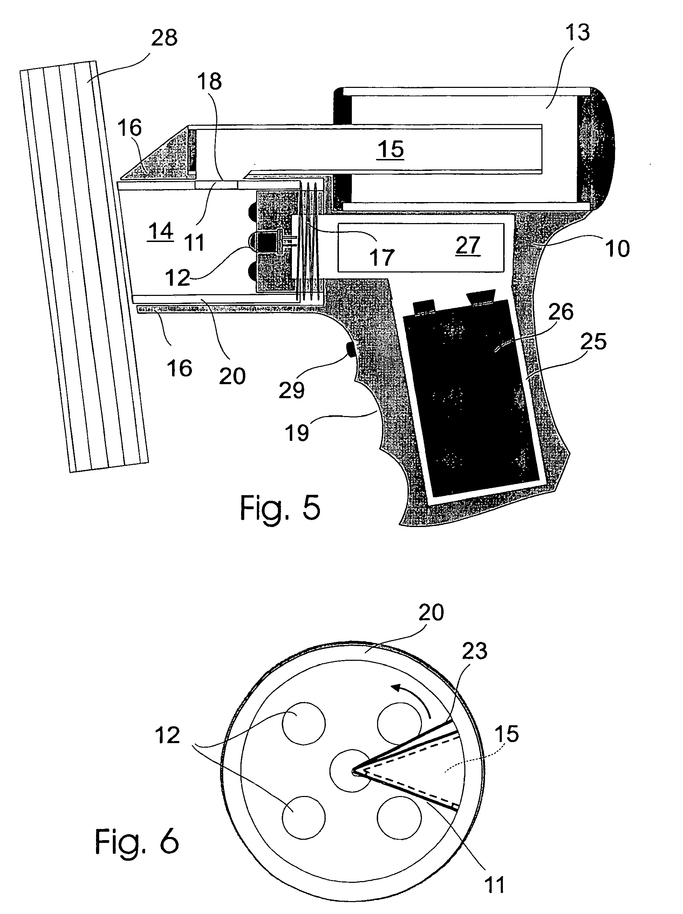

Um die Insekten nach Nachlassen der Immobilisierungs- bzw. Blendwirkung zu veranlassen, den Fangraum 14 zu verlassen, wird dieser abgedunkelt. Die Abdunkelung geschieht im Ausführungsbeispiel, wie ein Vergleich zwischen Fig. 3 und Fig. 5 zeigt dadurch, dass nach dem Überstülpen des Fangraums 14 über das Insekt das Gehäuse 10 relativ zum Fangraum 14 bzw. zur Fanghülse 20 bewegt wird. Dies führt dazu, dass das vorzugsweise lichtundurchlässige Gehäuse 10 als Verdunklungselement 16 über die lichtdurchlässige Fanghülse 20 gelangt

Die Relativbewegung zwischen Gehäuse 10 und Fanghülse 20 hat aber noch andere Konsequenzen. So wird zum Beispiel der Übergangsbereich 15 erst durch diese Relativbewegung freigegeben. Der Übergangsbereich bildet damit, wie am ehesten aus Fig. 5 zu erkennen ist, eine wenigstens einseitig verschließbare Schleuse. Dadurch können in der Sammeleinrichtung 13 befindliche Insekten nicht ohne weiteres wieder zurück in den Fangraum 14 gelangen, Zur Erzeugung der Relativbewegung ist die Fanghülse 20 am Gehäuse 10 vorzugsweise gegen die Kraft wenigstens eines elastischen Elements 17 begrenzt beweglich gelagert.

Die Lichtquelle 12 kann entweder mit dem Fangraum 14 gemeinsam bewegt werden oder gemäß den Figuren am Gehäuse 10 befestigt sein, so dass das Insekt bei der Bewegung des Fangraums gegenüber dem Gehäuse 10 näher an die Lichtquelle gelangt. Die dabei auftretende Bewegung kann gleichzeitig durch eine entsprechende Geometrie des Gehäuses 10 dazu benutzt werden, das Volumen des Fangraums 14 so zu verringern, dass das Insekt bedrängt wird.

Gemäß Fig. 5 führt die Relativbewegung dazu, dass die Fangöffnung 11 und die Verbindungsöffnung 18 miteinander in Deckung gelangen, so dass sich für das Insekt der ansonsten vorzugsweise schleusenartig abgedichtete Weg in die Sammeleinrichtung 13 öffnet. Vorzugsweise ist dieser Übergangsbereich 15 insbesondere bei Verdunklung des Fangraums 14 so angeordnet, dass das Insekt über den Übergangsbereich 15 in die Sammeleinrichtung 13 gelangt. Dabei kann Licht über den Übergangsbereich 15 zum Insekt gelangen, so dass das Insekt angelockt wird. Dieses Licht kann entweder das Umgebungslicht oder aber auch eine gesonderte Lichtquelle sein. Im Ausführungsbeispiel ist die Wandung der Sammeleinrichtung 13 transparent und/oder diffus, so dass ein diffuses Licht bis zur Verbindungsöffnung 18 gelangen kann. Wird die Verbindungsöffnung als Übergangsbereich 15 zur Sammeleinrichtung 13 durch die Bewegung des Fangraums relativ zum Gehäuse 10 freigegeben, gelangt das Insekt wie z.B. in Fig. 3 und 5 verdeutlicht in ein ebenfalls zum Übergangsbereich 15 gehörendes; gesondertes Behältnis, das in der Sammeleinrichtung 13 endet. Das Insekt folgt damit dem Licht und kommt über das gesonderte Behältnis des Übergangsbereichs 15 bis in die Sammeleinrichtung 13. In der Sammeleinrichtung 13 weitet sich der Raum wieder auf, so dass das Insekt nicht freiwillig zurück in den Übergangsbereich 15 gelangt. Selbst wenn, wird es durch die am Eingang des Übergangsbereich 15 angeordnete, durch die Fangöffnung 11 und die Verbindungsöffnung 18 gebildete Schleuse zurückgehalten. Der Querschnitt des vorzugsweise rohrförmigen Übergangsbereichs 15 ist auf die zu fangenden Insekten so abgestimmt, dass diese den Querschnitt als Fluchtweg noch beschreiten, jedoch nach Verlassen des Querschnitts nicht in diesen zurückgelangen wollen. Diese Unwilligkeit ist die eine Seite der Schleuse, vorzugsweise sollte aber die andere Seite des Übergangsbereichs tatsächlich als Öffnung ausgebildet sein, die wie eine Schleuse die Insekten nur einlässt, aber nicht auslässt. Bedarfsweise kann aber auch eine doppelte Schleuse vorgesehen werden.

In der Praxis sind auch Insekten aufgetreten, die nur unwillig den Fangraum 14 in Richtung auf den Sammelbehälter 13 verlassen haben, so dass das Insekt erst nach einigen Sekunden gefangen werden konnte. Um den Einsatz des Geräts daher für den Benutzer angenehmer zu machen, kann im Ausführungsbeispiel der Fig. 6, die eine Ansicht des Fangraums 14 von vome zeigt, eine mechanische Vorrichtung zum Abheben des Insekts vorgesehen werden. Diese Vorrichtung verfrachtet das im Fangraum befindliche Insekt in die Fangöffnung 11, die dann vorzugsweise solange verschlossen wird, bis das Insekt den Weg in den Sammelbehälter 13 gefunden hat. Wird also in Fig. 6 der Fangraum 14 über das Insekt gestülpt, nachdem es durch das Licht der Lichtquelle 12 geblendet wurde, führt die Relativbewegung zwischen Fanghülse 20 und Gehäuse 10 dazu, dass ein keilförmiger Bereich z.B. aus der benutzerseitigen Grenzfläche des Fangraums 14 vorzugsweise bis zur Anlagefläche 28 gelangt, der seitlich die Fangöffnung 11 aufweist. Dieser keilförmige Bereich ist insofern ein Teil des Übergangsbereichs 15. An der der Fangöffnung 11 gegenüberliegenden Seite des Keils befindet sich als mechanische Vorrichtung z.B. ein in Fig. 6 im Ausgangs- oder Ruhezustand dargestellter Wischer 23, der nach Anlage an der Anlagefläche 28 kreisförmig durch den Fangraum streicht und dabei das Insekt in die Fangöffnung 11 verfrachtet. Er bleibt an der Fangöffnung stehen, bis das Insekt im Sammelbehälter angelangt ist. Als Signal hierfür kann ein Signal der Erkennungseinrichtung 21 oder z.B. die Betätigung der Betätigungseinrichtung 29 durch den Benutzer verwendet werden, woraufhin der Wischer 23 in seine Ausgangsstellung zurückfährt oder, falls der keilförmige Bereich in seine Ausgangsstellung zurückfährt und dies erwünscht ist, diesen Bereich überstreicht, was zu einer 360°-Bewegung des Wischers führt. Vorzugsweise wird die Fangöffnung 11 beim Freisetzen des keilförmigen Bereichs geöffnet und beim Abheben der Vorrichtung automatisch geschlossen, so dass dadurch eine Seite einer Schleuse gebildet wird, die eine Bewegung des Insekts zurück in den Fangraum 14 verhindert. Auf der anderen Seite kann eine weitere Seite einer Schleuse vorgesehen sein, so dass zwar der Übergangsbereich 15 bei Öffnen der Fangöffnung vom Sammelbehälter aus nicht mehr zugänglich ist, nach dem Schließen der Fangöffnung 11 aber ein Entweichen der gefangenen Insekten in den Sammelbehälter möglich ist.

Alternativ kann in einer zeichnerisch nicht dargestellten Ausführungsform nach Einfangen des Insekts im Fangraum 14 und Anlage des Gehäuses an der Anlagefläche 28 auch ein Abheben der Fanghülse 20 innerhalb des Verdunkelungselements oder des Gehäuses 10 erfolgen, so dass ein Wischer unter der Fanghülse den Fangraum 14 "auskehren" kann, um dadurch das Insekt in die Fangöffnung zu verfrachten. Beide Lösungen haben zudem den Vorteil, das damit auch ein Insekt von einer Fensterscheibe leichter entfernt werden kann, an der der Verdunkelungseffekt nicht im gleichen Maße eintritt wie an einer andern Fläche. Allerdings ist bei einer derartigen mechanisch oder elektrisch angetriebenen Vorrichtung zum Abheben der Insekten eine Verdunkelung nicht mehr zwingend erforderlich.

Der Vorteil der gesamten Vorrichtung, die in den Ausführungsbeispielen als Handgerät ausgebildet ist, besteht vor allem darin, dass die Insekten nur kurzfristig immobilisiert werden, dann aber vorzugsweise von selbst, durch eigenes Bestreben in die Sammeleinrichtung 13 gelangen. Die Insekten werden damit nicht getötet, so dass es dem Anwender überlassen bleibt, was er mit den Insekten nach dem "Aufsammeln" macht. Dazu ist die im wesentlichen geschlossene Sammeleinrichtung 13 vom Gehäuse 10 zum Transport, zum Freilassen oder zur Entsorgung der gefangenen Insekten abnehmbar. Tierschützer oder Gläubige von Weltreligionen, die an die Wiedergeburt glauben, können die Insekten anschließend z.B. frei lassen.

Gemäß den Figuren weist die Vorrichtung ein Griffelement 19 auf, so dass es leicht zu ergreifen ist. Am Griffelement 19 selbst ist ein Betätigungselement 29 zur Betätigung der Lichtquelle vorgesehen. Die Lichtquelle wird z.B. von einer Batterie 26 im Batteriefach 25 mit Energie versorgt. Die Steuerelemente sind z.B. auf einer Platine 27 angeordnet. Vorzugsweise erstreckt sich der in der Fanghülse 16 angeordnete Fangraum 14 gemäß Fig. 1 über das Gehäuse 10 nach vorne hinaus, so dass beim Überstülpen des Fangraums über das Insekt die Begrenzung des Fangraums 14 zu erkennen ist.

Da der Fangraum 14 nach Verdunkelung durch das Einführen des Fangraums in das Gehäuse 10 infolge der Relativbewegung nicht mehr einsehbar ist, kann gemäß Fig. 3 im Übergangsbereich 15 eine Erkennungsvorrichtung 21 zum Erkennen des Durchgangs von gefangenen Insekten vorgesehen werden. Diese Erkennungsvorrichtung kann entweder anzeigen, dass ein Insekt den Übergangsbereich passiert hat oder es ist wenigstens ein Signalgeber 22 vorgesehen, der bei Durchtritt eines Insekts infolge des Signals der Erkennungsvorrichtung ein akustisches oder optisches Signal gibt. Zudem kann der Übergangsbereich15 auch transparent sein, so dass der Benutzer beobachten kann, ob sich das Insekt in die Sammeleinrichtung begeben hat.

Es hat sich herausgestellt, dass die Blendwirkung auch vom Umgebungslicht abhängig ist. Wird das Insekt z.B. bei Nacht zu stark geblendet, so kann es einige Sekunden dauern, bevor die Blendwirkung nachlässt und das Insekt zu flüchten beginnt. Um dies zu optimieren, kann ergänzend ein Lichtsensor zur Erfassung des Umgebungslichts vorgesehen sein, so dass die Lichtquelle entsprechend auf die Umgebungshelligkeit abgestimmt wird.

Bevorzugte Wellenlängen des Lichts liegen im grünen, blauen und weißen Bereich, während Rot und Infrarot sich als weniger vorteilhaft herausgestellt haben, die Auswahl ist jedoch auch von den jeweils zu fangenden Insekten abhängig. Der Fangraum selbst hat im Ausführungsbeispiel einen Durchmesser von 20 bis 40 mm, das Gehäuse im Bereich des Fangraums 14 einen Durchmesser von 25 bis 45 mm. Zur besseren Abdichtung z.B. auf einem unebenen Untergrund kann bedarfsweise in diesem Bereich eine Gummiunterlage oder ein Gummianlagering am unteren Rand des Fangraums vorgesehen werden.

Die Vorrichtung selbst arbeitet wie folgt: Zunächst wirkt die lmmobilisierungseinrichtung vor der Vorrichtung und insbesondere vor der Fangöffnung 11 aus der Vorrichtung heraus bis in den Fangbereich 24. Damit hat die Immobilisierungseinrichtung Einfluss auf Fangbereich 24 und Fangraum 14. Ein in diesem Bereich sich befindendes Insekt wird damit bereits aus einem gewissen Abstand immobilisiert, so dass im Anschluss daran der vor der Fangöffnung angeordnete, von der Immobilisierungseinrichtung beeinflussbare Fangraum 14 über das an der Anlagefläche 28 befindliche Insekt gestülpt werden kann. Das so gefangene Insekt gelangt dann infolge seines Fluchtinstinkts oder mit Hilfe der mechanischen Vorrichtung zum Abheben des Insekts - wie z.B. der Wischer 23 - über einen Übergangsbereich 15 in die Sammeleinrichtung 13. Der Wischer kann z.B. über eine Feder oder einen elektrischen Antrieb in seine Ausgangsstellung überführt werden. Im Ausführungsbeispiel ist die Immobilisierungseinrichtung eine Lichtquelle, die nicht zum Anziehen der Insekten, sondern zum Blenden der Insekten dient. Nach Nachlassen der Blendwirkung gelangt das Insekt vorzugsweise selbstständig in die Fangöffnung 11.

Die Lichtquelle wird mit einer zumindest für das Insektenauge sichtbaren Wellenlänge betrieben. Nach dem Überstülpen des Fangraums 14 über das Insekt wird der Übergangsbereich 15 verdunkelt. Hierzu kann z.B. eine Relativbewegung zwischen der zumindest teilweise lichtdurchlässigen Fanghülse 20 und dem Gehäuse 10 erfolgen, so dass das Gehäuse 10 den Fangraum abdunkelt. Dabei wird der Übergangsbereich 15 freigegeben, da Fangöffnung 11 und Verbindungsöffnung 18 zur Sammeleinrichtung 13 in Deckung gelangen. Gleichzeitig wird das Volumen des Fangraums 14 durch die Relativbewegung zwischen Fanghülse 20 und Gehäuse 10 verringert. Diese Bewegung kann auch zum Ausschalten der Lichtquelle 12 genutzt werden. Dies alles beeinflusst den Fluchtinstinkt des Insekts. Der Fluchtinstinkt wird dadurch erhöht, dass Licht über den Übergangsbereich 15 zum Insekt gelangt, so dass dieses in diese Richtung angezogen wird. Beim Durchtritt durch den Übergangsbereich 15 kann eine Erkennungsvorrichtung 21 erfassen, ob das Insekt tatsächlich in Richtung Sammeleinrichtung 13 gelangt ist, so dass ein akustisches oder optisches Signal gegeben wird. Danach kann die Vorrichtung wieder von der Unterlage, auf der das Insekt gefangen wurde, abgenommen werden und zum nächsten Einsatz kommen.

### Bezugszeichenliste

- 10: Gehäuse
- 11: Fangöffnung
- 12: Lichtquelle
- 13: Sammeleinrichtung
- 14: Fangraum
- 14a: Wandung
- 15: Übergangsbereich
- 16: Verdunklungselement
- 17: elastisches Element
- 18: Verbindungsöffnung
- 19: Griffelement
- 20: Fanghülse
- 21: Erkennungsvorrichtung
- 22: Signalgeber
- 23: Wischer
- 24: Fangbereich
- 25: Batteriefach
- 26: Batterie
- 27: Platine
- 28: Anlagefläche
- 29: Betätigungselement

## Patentansprüche

1. Vorrichtung zum Einfangen von Insekten mit
- einem Gehäuse (10) mit einer Fangöffnung (11),
- einer Lichtquelle (12) zum Blenden und zum zumindest zeitweisen Immobilisieren der Insekten,
- einer Sammeleinrichtung (13) zum Sammeln und Rückhalten von Insekten, die die Fangöffnung (11) passiert haben,
- einem vor der Fangöffnung (11) vorgesehenen, von der Lichtquelle (12) zumindest zeitweise beeinflussbarem Fangbereich (24) außerhalb der Vorrichtung mit zugehörigem, zumindest teilweise lichtdurchlässigem Fangraum (14), um die Insekten von dort über die Fangöffnung zur Sammeleinrichtung (13) zu bringen,
**dadurch gekennzeichnet, dass** die Vorrichtung ein den verdunkelbaren Fangraum (14) bedarfsweise überdeckendes Verdunkelungselement (16) aufweist und dass eine mechanische Vorrichtung zum Abheben des Insekts von der Anlagefläche (28) vorgesehen ist.

2. Vorrichtung nach Anspruch 1, **dadurch gekennzeichnet, dass** die nahe der Fangöffnung (11) angeordnete Lichtquelle (12) mit einer zumindest für das Insektenauge sichtbaren Wellenlänge betrieben ist und/oder eine zwischen 5 und 20 Hertz, vorzugsweise mit 10 Hertz modulierte Lichtquelle ist.

3. Vorrichtung nach einem der vorhergehenden Ansprüche, **dadurch gekennzeichnet, dass** im Übergangsbereich (15) zwischen Fangöffnung (11) und Sammelbehälter (13) eine wenigstens einseitig verschließbare Schleuse vorgesehen ist.

4. Vorrichtung nach einem der vorhergehenden Ansprüche, dass bei Verdunkelung des Fangraums (14) ein Übergangsbereich (15) zwischen Fangöffnung (11) und Sammelbehälter (13) so angeordnet ist, dass das Insekt vorzugsweise durch Licht angelockt über den Übergangsbereich (15) in die Samme!einrichtung (13) gelangt.

5. Vorrichtung nach einem der vorhergehenden Ansprüche, **dadurch gekennzeichnet, dass** das Verdunkelungselement (16) durch das Gehäuse (10) gebildet ist.

6. Vorrichtung nach einem der vorhergehenden Ansprüche, **dadurch gekennzeichnet, dass** der Fangraum (14) am Gehäuse (10) vorzugsweise gegen die Kraft wenigstens eines elastischen Elements (17) begrenzt beweglich gelagert ist und/oder eine Verbindungsöffnung (18) als Übergangsbereich (15) zur Sammeleinrichtung (13) aufweist, die durch Bewegung des Fangraums (14) relativ zum Gehäuse (10) frei gegeben wird.

7. Vorrichtung nach einem der vorhergehenden Ansprüche, **dadurch gekennzeichnet, dass** im Übergangsbereich (15) ein gesondertes Behältnis vorgesehen ist, das an eine Verbindungsöffnung (18) zum Fangraum anschließt und in der Sammeleinrichtung (13) endet und/oder dass der Querschnitt des vorzugsweise rohrförmigen Übergangsbereichs (15) auf die zu fangenden Insekten so abgestimmt ist, dass diese den Querschnitt als Fluchtweg noch beschreiten.

8. Vorrichtung nach einem der vorhergehenden Ansprüche, **dadurch gekennzeichnet, dass** die Vorrichtung ein Handgerät ist.

9. Vorrichtung nach einem der vorhergehenden Ansprüche, **dadurch gekennzeichnet, dass** im Übergangsbereich eine Erkennungsvorrichtung (21) zum Erkennen des Durchgangs von gefangenen Insekten vorgesehen ist, wobei vorzugsweise der Erkennungsvonichtung (21) wenigstens ein Signalgeber (22) zugeordnet ist, der bei Durchtritt eines Insekts durch den Übergangsbereich (15) ein akustisches oder optisches Signal gibt.

10. Vorrichtung nach einem der vorhergehenden Ansprüche, **dadurch gekennzeichnet, dass** die mechanische Vorrichtung zum Verbringen in die Fangöffnung (11) vorgesehen ist und/oder durch einen im Fangraum (14) oder im Verdunkelungselement (16) vor dem Fangraum angeordneten Wischer (23) gebildet ist.

11. Verfahren zum Fangen von Insekten mittels einer Vorrichtung mit
- einem Gehäuse (10) mit einer Fangöffnung (11),
- einer Lichtquelle (12) zum Blenden und zumindest zeitweisen Immobilisieren wenigstens eines Insekts,
- einer Sammeleinrichtung (13) zum Sammeln und Rückhalten von Insekten, die die Fangöffnung (11) passiert haben,
mit den Schritten:
- Einsetzen der Lichtquelle in einem zumindest zeitweise beeinflussbaren Fangbereich (24) außerhalb der Vorrichtung mit zugehörigem Fangraum (14),
- Blenden des Insekts mittels der wenigstens einen Lichtquelle (12),
- Überstülpen des vor der Fangöffnung (11) angeordneten, von der Lichtquelle beeinflussbaren, zumindest teilweise lichtdurchlässigen Fangraums (14) über das Insekt,
- Führen oder Überführen des Insekts aus dem Fangraum über die Fangöffnung zur Sammeleinrichtung (13).
**gekennzeichnet durch** die Schritte:
- Verdunkeln des verdunkelbaren Fangraums (14) **durch** eine Relativbewegung des Fangraums (14) gegenüber einem Verdunkelungselement (16),
- mechanisches Abheben des Insekts von einer Anlagefläche (28).

12. Verfahren nach Anspruch 11, **dadurch gekennzeichnet, dass** die Lichtquelle (12) mit einer zumindest für das Insektenauge sichtbaren Wellenlänge betrieben ist und/oder mit einer Frequenz zwischen 5 und 20 Hertz, vorzugsweise 10 Hertz moduliert wird.

13. Verfahren nach Anspruch 11 oder 12, **dadurch gekennzeichnet, dass** die Intensität der Lichtquelle nach dem Überstülpen von 0 auf 100% gedimmt wird, wobei das Dimmen vorzugsweise etwa zwei Sekunden dauert.

14. Verfahren nach einem der Ansprüche 11 bis 13, **dadurch gekennzeichnet, dass** der Fangraum (14) kurz vor oder nach dem Überstülpen bis auf den Übergangsbereich (15) verdunkelt wird und/oder dass beim Verdunkeln des Fangraums (14) durch eine Relativbewegung des Fangraums (14) gegenüber dem das Verdunkelungselement (16) bildenden Gehäuse (10) zugleich der Übergangsbereich (15) frei gegeben wird.

15. Verfahren nach einem der Ansprüche 11 bis 14, **dadurch gekennzeichnet, dass** die Fangöffnung (11) durch eine Relativbewegung des Fangraums (14) gegenüber dem Gehäuse (10) freigesetzt wird und das zu fangende Insekt mit Hilfsmitteln mechanisch oder durch Eigeninitiative in die Fangöffnung gelangt und/oder dass die Fangöffnung (11) beim Abheben der Vorrichtung vom Untergrund selbsttätig geschlossen wird und das Insekt über einen Schleusenbereich in die Sammeleinrichtung (13) gelangt.

16. Verfahren nach einem der Ansprüche 11 bis 15, **dadurch gekennzeichnet, dass** das Volumen des Fangraums (14) durch Bewegung des Fangraums (14) relativ zum Gehäuse (10) verändert wird.

17. Verfahren nach einem der Ansprüche 11 bis 16, **dadurch gekennzeichnet, dass** nach dem Überstülpen des Fangraums (14) die Lichtquelle (12) vorzugsweise durch eine Relativbewegung des Fangraums (14) gegenüber dem Gehäuse (10) ausgeschaltet wird, wobei vorzugsweise nach oder gleichzeitig mit dem Ausschalten der Lichtquelle (12) eine weitere Lichtquelle zur Beleuchtung des Fluchtwegs eingeschaltet wird.

18. Verfahren nach einem der Ansprüche 11 bis 17, **dadurch gekennzeichnet, dass** eine im Übergangsbereich (15) angeordnete Erkennungsvorrichtung (21) in Abhängigkeit der Erkennung von den den Übergangsbereich passierenden Insekten ein Signal an einen Signalgeber (22) für ein akustisches oder optisches Signal gibt.

19. Verfahren nach einem der Ansprüche 11 bis 18, **dadurch gekennzeichnet, dass** das Insekt mechanisch in die Fangöffnung (11) verbracht wird und/oder die Fangöffnung (11) solange verschlossen wird, bis das Insekt den Weg in den Sammelbehälter (13) gefunden hat.

20. Verfahren nach Anspruch 19, **dadurch gekennzeichnet, dass** der Fanraum (14) durch eine mechanische Vorrichtung ausgekehrt wird, sobald die Fanghülse über das Insekt gestülpt ist.

## Claims

1. Apparatus for capturing insects, said apparatus including
- a housing (10) with a trap opening (11),
- a light source (12) for dazzling and for at least partial immobilisation of the insects,
- a collecting device (13) for collecting and retaining insects which have passed the trap opening (11),
- a trap region (24) provided in front of the trap opening (11) and which trap region can be at least partially influenced by the light source (12) and is provided externally of the apparatus, with associated trap area (14) in order to bring the insects from said trap region via the trap opening to the collecting device (13),
**characterised in that** the apparatus comprises an obscuring element (16), which covers a trap area (14) that can be obscured where necessary, and **in that** a mechanical apparatus is provided to lift the insects off a contact surface (28).

2. Apparatus according to claim 1, **characterised in that** the light source (12), which is disposed in the vicinity of the trap opening (11), is operated at a wavelength that is visible at least to the insect eye and/or is a light source modulated between 5 and 20 Hertz, preferably 10 Hertz.

3. Apparatus according to one of the preceding claims, **characterised in that** a lock, which is at least closable on one side, is provided in the transfer region (15) between trap opening (11) and collection container (13).

4. Apparatus according to one of the preceding claims, in that when the trap area (14) is obscured, a transfer region (15) between trap opening (11) and collection container (13) is disposed such that the insect, preferably lured by the light, passes via the transfer region (15) into the collecting device (13).

5. Apparatus according to one of the preceding claims, **characterised in that** the obscuring element (16) is formed by the housing (10).

6. Apparatus according to one of the preceding claims, **characterised in that** the trap area (14) is mounted on the housing (10) so as to be displaceable in a limited manner preferably in opposition to the force of at least one resilient element (17) and/or comprises a connecting opening (18) as transfer region (15) to the collecting container (13), said connecting opening being opened by means of the movement of the trap area (14) relative to the housing (10).

7. Apparatus according to one of the preceding claims, **characterised in that** a separate container is provided in the transfer region (15), said container communicating with a connecting opening (18) to the trap area and ending in the collecting device (13) and/or **in that** the cross section of the preferably tubular transfer region (15) is adapted in such a manner to the insects to be caught that the said insects still follow the cross-section as their escape route.

8. Apparatus according to one of the preceding claims, **characterised in that** the apparatus is a hand-held device.

9. Apparatus according to one of the preceding claims, **characterised in that** a detecting apparatus (21) for detecting the passage of trapped insects is provided in the transfer region, wherein preferably at least one signal transmitter (22), which outputs an acoustic or optical signal when an insect passes through the transfer region (15), is associated with the detecting apparatus (21).

10. Apparatus according to one of the preceding claims, **characterised in that** the mechanical apparatus is provided to move the insects into the trap opening (11) and/or is formed by a wiper (23), which is disposed in the trap area (14) or in the obscuring element (16) in front of the trap area.

11. Method for capturing insects through the intermediary of an apparatus, which includes:
- a housing (10) with a trap opening (11),
- at least one light source (12) for dazzling and for the at least partial immobilisation of at least one insect,
- a collecting device (13) for collecting and retaining insects which have passed the trap opening (11),
comprising the steps:
- using the at least one light source (12) in a trapping region (24), that can be at least partially influenced, externally of the apparatus, with associated trap area (14),
- dazzling the insect through the intermediary of the at least one light source (12),
- slipping the trap area (14), which is disposed in front of the trap opening (11) and can be influenced by the at least one light source and is at least partially transparent, over the insect,
- guiding or conveying the insect out of the trap area (14) via the trap opening to the collecting device (13)
**characterised by** the steps:
- obscuring the trap area that can be obscured through a relative movement of the trap area (14) relative to a obscuring element (16),
- mechanically lifting the insect off a contact surface (28).

12. Method according to claim 11, **characterised in that** the light source (12) is operated at a wavelength that is as least visible to an insect eye and/or is modulated with a frequency between 5 and 20 Hertz, preferably 10 Hertz.

13. Method according to one of claims 11 or 12, **characterised in that** once the trap area has been slipped over the insect, the intensity of the light source is dimmed from 0 to 100%, wherein preferably the dimming lasts for approximately two seconds.

14. Method according to one of claims 11 to 13, **characterised in that** the trap area (14) is obscured as far as the transfer region (15) shortly before or after being slipped over the insect and/or that in obscuring the trap area (14) by means of a relative movement of the trap area (14) relative to the housing (10) forming the obscuring element (16), wherein at the same time the transfer region (15) is opened.

15. Method according to one of claims 11 to 14, **characterised in that** the trap opening (11) is opened by means of a relative movement of the trap area (14) relative to the housing (10) and the insect to be caught passes into the trap opening mechanically through the intermediary of auxiliary means or through its own initiative and/or that the trap opening (11) is automatically closed when the apparatus is lifted off the base support and the insect passes into the collecting device (13) via a lock region.

16. Method according to one of claims 11 to 15, **characterised in that** the volume of the trap area (14) is altered by moving the trap area (14) relative to the housing (10).

17. Method according to one of claims 11 to 16, **characterised in that** after the trap area (14) has been slipped over the insect, the light source (12) is switched off preferably by means of a relative movement of the trap area (14) relative to the housing (10), wherein preferably after the light source (12) has been switched off or simultaneously as the light is being switched off, an additional light source is switched on to illuminate the escape route.

18. Method according to one of claims 11 to 17, **characterised in that** a detecting apparatus (21), which is disposed in the transfer region (15), gives a signal to a signal transmitter (22) for an acoustic or optical signal in dependence on the detecting of the insects passing the transfer region.

19. Method according to one of claims 18 to 30, **characterised in that** the insect is moved into the trap opening (11) in a mechanical manner and/or the trap opening (11) is closed until the insect has found the way into the collecting container (13).

20. Method according to claim 19, **characterised in that** the trap area (14) is cleaned out by means of a mechanical apparatus as soon as the trap sleeve is slipped over the insect.

## Revendications

1. Dispositif pour capturer des insectes, comprenant:
- un boîtier (10) avec un orifice de capture (11),
- une source de lumière (12) pour éblouir et pour immobiliser les insectes au moins temporairement,
- un dispositif collecteur (13) pour collecter et retenir des insectes qui ont franchi l'orifice de capture (11),
- une zone de capture (24), prévue devant l'orifice de capture (11), pouvant être influencée au moins temporairement par la source de lumière (12) et située en dehors du dispositif, avec un espace de capture (14) associé, transparent au moins en partie, pour amener les insectes de là au dispositif collecteur (13) via l'orifice de capture,
**caractérisé en ce que** le dispositif comporte un élément obscurcissant (16) qui recouvre, selon les besoins, l'espace de capture (14) obscurcissable, et **en ce qu'**est prévu un dispositif mécanique pour soulever l'insecte de la surface de contact (28).

2. Dispositif selon la revendication 1, **caractérisé en ce que** la source de lumière (12), située à proximité de l'orifice de capture (11), fonctionne avec une longueur d'onde visible au moins pour l'oeil de l'insecte et/ou est une source de lumière modulée entre 5 et 20 hertz, préférentiellement avec 10 hertz.

3. Dispositif selon l'une des revendications précédentes, **caractérisé en ce qu'**est prévu, dans l'interzone (15), entre orifice de capture (11) et récipient collecteur (13), un sas fermable au moins d'un côté.

4. Dispositif selon l'une des revendications précédentes, **caractérisé en ce que**, à l'obscurcissement de l'espace de capture (14), une interzone (15) entre l'orifice de capture (11) et le récipient collecteur (13) est située de manière telle que l'insecte, préférentiellement attiré par de la lumière, parvient au dispositif collecteur (13) via l'interzone (15).

5. Dispositif selon l'une des revendications précédentes, **caractérisé en ce que** l'élément obscurcissant (16) est constitué par le boîtier (10).

6. Dispositif selon l'une des revendications précédentes, **caractérisé en ce que** l'espace de capture (14) est logé mobile dans une mesure limitée sur le boîtier (10), préférentiellement à l'encontre de la force d'au moins un élément élastique (17), et/ou comporte un orifice de communication (18) en tant qu'interzone (15) menant au dispositif collecteur (13), lequel est débloqué par un mouvement de l'espace de capture (14) relativement au boîtier (10).

7. Dispositif selon l'une des revendications précédentes, **caractérisé en ce qu'**est prévu, dans l'interzone (15), un récipient séparé qui fait suite à un orifice de communication (18) vers l'espace de capture et se termine dans le dispositif collecteur (13) et/ou **en ce que** la section de l'interzone (15), préférentiellement tubulaire, est adaptée de manière telle aux insectes à capturer que ceux-ci franchissent encore la section en tant que chemin de fuite.

8. Dispositif selon l'une des revendications précédentes, **caractérisé en ce que** le dispositif est un appareil portatif.

9. Dispositif selon l'une des revendications précédentes, **caractérisé en ce qu'**est prévu, dans l'interzone, un dispositif de reconnaissance (21) pour reconnaître le passage d'insectes capturés, au moins un générateur de signaux (22) qui donne un signal acoustique ou optique au passage d'un insecte par l'interzone (15) étant préférentiellement affecté au dispositif de reconnaissance (21).

10. Dispositif selon l'une des revendications précédentes, **caractérisé en ce que** le dispositif mécanique est prévu pour transporter vers l'orifice de capture (11) et/ou est constitué par une raclette (23) située dans l'espace de capture (14) ou dans l'élément obscurcissant (16) devant l'espace de capture.

11. Procédé pour capturer des insectes au moyen d'un dispositif comprenant
- un boîtier (10) avec un orifice de capture (11),
- une source de lumière (12) pour éblouir et pour immobiliser un insecte au moins temporairement,
- un dispositif collecteur (13) pour collecter et retenir des insectes qui ont franchi l'orifice de capture (11),
comportant les étapes suivantes:
- mise en oeuvre de la source de lumière dans une zone de capture (24) influençable au moins temporairement et située en dehors du dispositif, avec un espace de capture (14) associé,
- éblouissement de l'insecte au moyen de l'au moins une source de lumière (12),
- pose de l'espace de capture (14), situé devant l'orifice de capture (11), influençable par la source de lumière et au moins partiellement transparent, par-dessus l'insecte,
- guidage ou transfert de l'insecte de l'espace de capture vers le dispositif collecteur (13) via l'orifice de capture,
**caractérisé par** les étapes suivantes:
- obscurcissement de l'espace de capture (14) obscurcissable par un mouvement relatif de l'espace de capture (14) par rapport à un élément obscurcissant (16),
- soulèvement mécanique de l'insecte d'une surface de contact (28).

12. Procédé selon la revendication 11, **caractérisé en ce que** la source de lumière (12) fonctionne avec une longueur d'onde visible au moins pour l'oeil de l'insecte et/ou est modulée avec une fréquence comprise entre 5 et 20 hertz, préférentiellement de 10 hertz.

13. Procédé selon la revendication 11 ou 12, **caractérisé en ce que**, après la pose par-dessus, on fait varier l'intensité de la source de lumière de 0 à 100 %, la variation durant préférentiellement environ deux secondes.

14. Procédé selon l'une des revendications 11 à 13, **caractérisé en ce que** l'espace de capture (14) s'obscurcit peu avant ou après la pose par-dessus sauf dans l'interzone (15) et/ou **en ce que**, à l'obscurcissement de l'espace de capture (14), l'interzone (15) est en même temps débloquée par un mouvement relatif de l'espace de capture (14) par rapport au boîtier (10) constituant l'élément obscurcissant (16).

15. Procédé selon l'une des revendications 11 à 14, **caractérisé en ce que** l'orifice de capture (11) est dégagé par un mouvement relatif de l'espace de capture (14) par rapport au boîtier (10) et l'insecte à capturer parvient à l'orifice de capture mécaniquement par des moyens auxiliaires ou de sa propre initiative et/ou **en ce que** l'orifice de capture (11) se ferme automatiquement, lorsque le dispositif se soulève du fond, et l'insecte parvient au dispositif collecteur (13) via une zone de sas.

16. Procédé selon l'une des revendications 11 à 15, **caractérisé en ce que** le volume de l'espace de capture (14) se modifie par un mouvement de l'espace de capture (14) relativement au boîtier (10).

17. Procédé selon l'une des revendications 11 à 16, **caractérisé en ce que**, après la pose de l'espace de capture (14) par-dessus, la source de lumière (12) s'éteint préférentiellement par un mouvement relatif de l'espace de capture (14) par rapport au boîtier (10), une autre source de lumière pour éclairer le chemin de fuite s'allumant après ou en même temps que l'extinction de la source de lumière (12).

18. Procédé selon l'une des revendications 11 à 17, **caractérisé en ce qu'**un dispositif de reconnaissance (21), situé dans l'interzone (15), donne un signal à un générateur de signaux (22) pour un signal acoustique ou optique en fonction de la reconnaissance des insectes qui franchissent l'interzone.

19. Procédé selon l'une des revendications 11 à 18, **caractérisé en ce que** l'insecte est transporté mécaniquement vers l'orifice de capture (11) et/ou l'orifice de capture (11) reste fermé jusqu'à ce que l'insecte ait trouvé le chemin menant au récipient collecteur (13).

20. Procédé selon la revendication 19, **caractérisé en ce que** l'espace de capture (14) est balayé par un dispositif mécanique dès que le manchon de capture
